# EUROPEAN PATENT SPECIFICATION

(11) **EP 1 574 362 B1**
(45) Date of publication and mention of the grant of the patent: **30.07.2008**
(21) Application number: 05101558.4
(22) Date of filing: 01.03.2005
(51) Int. Cl.: B60C 9/22, B29D 30/30

(54) **A pneumatic tire having a crown reinforcement structure with a plurality of adjacent cord reinforced strips and a process to manufacture or retread such a tire**
Luftreifen mit einer Verstärkungsstruktur, die eine Mehrzahl von aus nebeneinander Corden Verstärkungsstreifen aufweist, und Verfahren zur Herstellung oder Runderneuerung solcher Luftreifen
Bandage pneumatique avec un renfort de sommet ayant une pluralité de bandes à câbles adjacents, et procédé pour sa fabrication où son rechapage

(30) Priority: 08.03.2004 US 795633
(43) Date of publication of application: 14.09.2005
(73) Proprietor: THE GOODYEAR TIRE & RUBBER COMPANY, Akron, OH 44316-0001 (US)
(72) Inventor: Oosterwijk, Antonius Johannes Bernardus, L-9061, Ettelbruck (LU); Vermaat, Piet, L-9168, Mertzig (LU); Harding, Anthony, 44320, Akron (US)
(74) Representative: Kutsch, Bernd

(56) References cited:
- EP-A- 0 712 739
- DE-A1- 4 205 058
- DE-A1- 4 209 818

## Description

### Field of the Invention

This invention relates to a pneumatic tire like a radial aircraft tire or bias aircraft tire having a crown reinforcement structure with a plurality of adjacent cord reinforced strips and processes to manufacture or retread such a tire.

### Background of the Invention

Pneumatic tires for high speed applications experience a high degree of flexure in the crown area of the tire as the tire enters and leaves the contact patch. This problem is particularly exacerbated on aircraft tires wherein the tires can reach speed of over 200 mph at takeoff and landing. When a tire spins at very high speeds the crown area tends to grow in dimension due to the high angular accelerations and velocity tending to pull the tread area radially outwardly. Counteracting these forces is the load of the vehicle, which is only supported in the small area of the tire known as the contact patch.

US-A-5,223,061 discloses a radial ply aircraft tire, having carcass plies reinforced by textile cords and folded axially around a pair of axially spaced bead cores, and a belt structure made of at least two layers of spirally wound stripes being reinforced by cords consisting at least in part of aramid yarn. Between each pair of neighboring layers of spirally wound strips, a ply reinforced by textile cords is interposed.

WO-A2-02/00456 describes an aircraft tire comprising a crown with a crown reinforcement structure comprising a plurality of cut reinforcing layers situated between the tread portion of the tire and the carcass and adapted to the size of the tire.

US-A-6,374,891 discloses a bias aircraft tire having at least six pairs of bias carcass plies preferably made of nylon and a pair of tread breaker plies extending from one edge of the tread portion to the axially opposite edge of the tread portion. Interposed between the tread breaker plies and the carcass plies is a cushion layer made of rubber.

US-A-6,622,764 B2 discloses a crown-stiffening underlay structure for a radial ply tire comprised of a flat strip of elastomeric material reinforced with inextensible cords. The flat strip is wrapped helically around the green tire carcass. In one embodiment, the underlay structure is disposed between breakers and the radial ply structure, in an other embodiment, the underlay is disposed between the radial ply structure and the innerliner.

EP-A- 0712739 describes a tire according to the preamble of claim 1 and a process according to the preamble of claim 9.

### Summary of the Invention

The invention relates to a pneumatic tire according to claim 1.

In one aspect of the invention, the plurality of adjacent cord reinforced strips forms at least one layer, which at least substantially covers the carcass in the crown region and which laterally extends from one lateral side of the tread portion to the other lateral side of the tread portion. The layer is either at least partially in direct contact with the inner side of the tread portion or is at least partially separated from the tread portion by a rubber cushion layer.
Preferably, the thickness of the rubber cushion layer is of from 0.3 mm to 2 mm, more preferably of from 0.5 mm to 1.5 mm.

In another aspect of the invention, the strips have a width of from 3 mm to 70 mm, preferably of from 10 mm to 50 mm, more preferably from 30 mm to 45 mm.

In a further aspect of the invention, the strips are inclined at 0.5° to 10°, preferably at 1 ° to 5°, relative to the circumferential direction of the tire. Preferably, the strips are formed by a spirally or a zigzag-shaped winding of a continuous strip onto the carcass leading, for example, to adjacent strips situated above the carcass and being oriented parallel to each other. Such a spiral overlay can be realized as an L-lay-up or an S-lay-up.

In a further aspect of the invention, this spirally or a zigzag-shaped winding of a continuous strip is done during retreading a buffed casing of a tire, preferably of a radial or bias aircraft tire, resulting in a belt structure or a crown reinforcement structure located radially outward of the carcass between the tread portion of the tire and the carcass.

In a further aspect of the invention, the strips are reinforced rubber strips forming at least one layer, preferably at least one closed or at least substantially closed layer, extending substantially across the width of the tread portion or a belt structure of the tire. Preferably, the strips are reinforced by a plurality of parallel cords. The material of the cords preferably comprises nylon or aramid, e.g. the cord is a nylon cord or an aramid cord. Thus, a crown reinforcement structure comprising a nylon spiral ply layer is formed.

In a further aspect of the invention, the surface side of the reinforced strips being across from the tread portion of the tire is at least partially in direct contact with a rubber cushion layer preferably having a thickness of from 0.2 mm to 3 mm.

The cord reinforced strips comprise a plurality of coplanar cords embedded in the strips, the plane of the coplanar cords being parallel to the plane of the strips, and the distance from the plane of the coplanar cords to an upper surface plane of the strips being different form the distance of the plane of the coplanar cords to a lower surface plane of the strips. Preferably, the difference in distances is of from 0.2 mm to 3 mm, more preferably of from 0.5 mm to 1.5 mm. The surface plane of the strips with the smaller distance to the plane of the coplanar cords faces the radially inner side of the tread portion.

In a further aspect of the invention, the tread portion essentially consists of rubber.

In a further aspect or the invention, the pneumatic tire is a retreaded tire, in particular a retreaded aircraft tire.

In additional accordance with the invention, a process to manufacture a pneumatic tire according to claim 9 is disclosed.

This process uses a green cord reinforced strip, which is transferred during the curing and simultaneous vulcanizing into the cord reinforced strip as described above.

In further accordance with the invention, a process to retread a pneumatic tire according to claim 10 is disclosed.

This process again uses a green cord reinforced strip, which is transferred during the curing and simultaneous vulcanizing into the cord reinforced strip as described above.

It is one object of the present invention to provide a process to manufacture or to retread a tire, which can be used either in the case of manufacturing or retreading radial tires or bias tires, preferably, aircraft tires.

It is a further object of the present invention to provide a process to retread a tire like an aircraft tire, the process including a buffing of the tire close to the carcass and a subsequent application of a green tread reinforcing ply layer and a new green tread onto the buffed carcass before curing and vulcanizing the tire.

It is a further object of the present invention to increase the accuracy of application of the crown reinforcement structure, in particular during retreading the tire.

It is a further object of the present invention to enable an automation of the application of the crown reinforcement structure, in particular during retreading the tire.

It is a further object of the present invention to avoid a cutting the crown reinforcement structure located between the tread portion of the tire and the carcass depending on the size of the tire and to use instead a crown reinforcement structure that fits or can be easily adapted to all sizes of tires. This obviates, for example, the preparation of precisely cut ply layers adapted to the size of tire to be retreaded or to be manufactured "on stock" and their precise application in the manufacturing process, leading to lower production cost and lower storage cost.

It is a further object of the present invention, to provide a crown reinforcement structure that can be applied without significantly modifying known production or retreading technologies for tires. This allows it to manufacture or to retread tires as usual besides the modified structure and application of the crown reinforcement.

It is a further object of the invention to provide an aircraft tire and a process to manufacture or retread aircraft tires.

It is a further object of the invention, to provide a crown reinforcement structure that can be removed from the tire together with the tread portion in the course of a retreading process in a safe and reliable way without holding the danger of damaging the carcass or the carcass plies of the tire.

It is a further object of the invention, to provide a retreading process that can be carried out several times, for example 5 to 10 times, during the life cycle of the carcass without damaging it.

It is a further object of the invention, to provide a crown reinforcement structure that can be easily changed in size and structure according to the specific needs of the tire during the manufacturing process thus being adaptable to a wide range of sizes of tires.

### Definitions

"Axial" and "axially" mean lines or directions that are parallel to the axis of rotation of the tire.

"Carcass" means the tire structure apart from the tread reinforcing belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands of which the plies in the tire are comprised.

"Equatorial plane (EP)" means the plane perpendicular to the tire's axis of rotation and passing through the center of its tread.

"Ply" means a layer of rubber-coated parallel cords.

"Radial" and "radially" mean directions radially toward or away from the axis of rotation of the tire.

### Brief Description of the Drawings

FIG. 1 is a schematically section view of an embodiment of the tire according to the invention;
FIG. 2 is a partially cutaway top view of the tire shown in FIG. 1 showing the lay-up of the strip;
FIG. 3 is a perspective view of a strip with an additional cushion layer on one side of the strip;
FIG. 4 is a perspective view of a strip with an additional cushion layer on both sides of the strip;
FIG. 5 is perspective view of a first embodiment of the invention using a strip shown in Fig. 1 and Fig. 2;
FIG. 6 is perspective view of a second embodiment of the invention using a strip shown in Fig. 1 and Fig. 2;
FIG. 7 is a partially cutaway top view of the tire shown in FIG. 1 with, compared to Fig. 2, an alternative lay-up of the strip realized according to one of the embodiments of Fig. 5 or Fig. 6.

### Detailed Description of the Invention

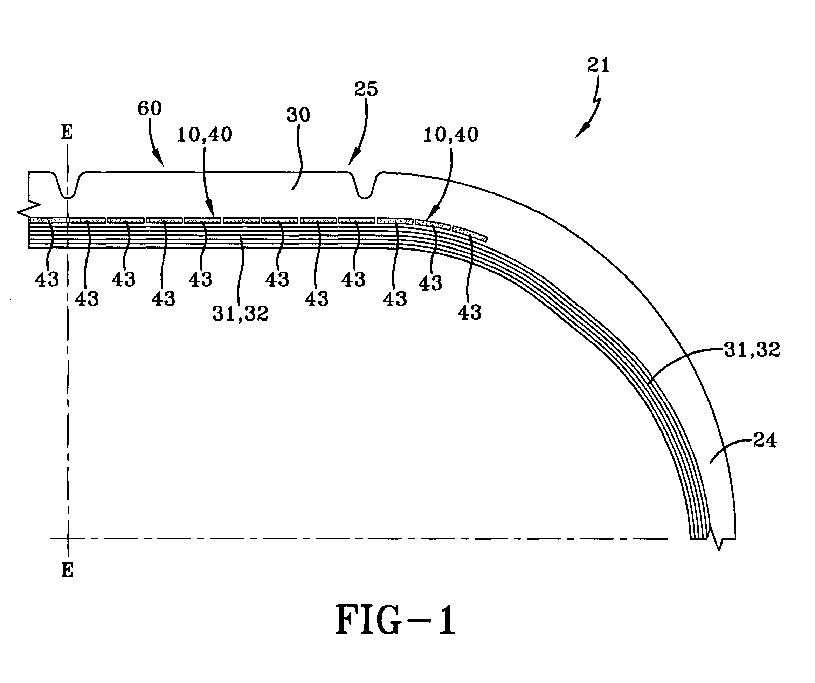

Fig. 1 shows a part of a tire 21, preferably a pneumatic radial or bias aircraft tire, which comprises a pair of bead portions (not shown) each containing a bead core (not shown) embedded therein, a sidewall portion 24 extending substantially outward from each of the bead portions in the radial direction of the tire 21, and a tread portion 25 of substantially cylindrical shape extending between radially outer ends of these sidewall portions 24. Furthermore, the tire 21 comprises a carcass 31 toroidially extending from one of the bead portions to the other bead portion. The carcass 31 is comprised of at least one carcass ply 32, preferably a plurality of carcass plies 32. In one embodiment, among these carcass plies 32, four inner plies are wound around the bead core from inside of the tire toward outside thereof to form turnup portions, while two outer plies are extended downward to the bead core along the outside of the turnup portion of the inner carcass ply. Each of these carcass plies 32 preferably contains many nylon cords such as nylon-6,6 cords, for example extending substantially perpendicular to an equatorial plane E of the tire 21 (i.e. extending in the radial direction of the tire). A tread rubber 30 is arranged radially outside of the carcass 31.

A layer 10 forming a belt structure 40 serving as a crown reinforcement structure is arranged between the carcass 31 and the tread rubber 30. In the embodiment of Fig. 1, the layer 10 is formed by a plurality of adjacent strips 43, which are helically wrapped onto the carcass 31 in the crown region 60 of the tire 21.

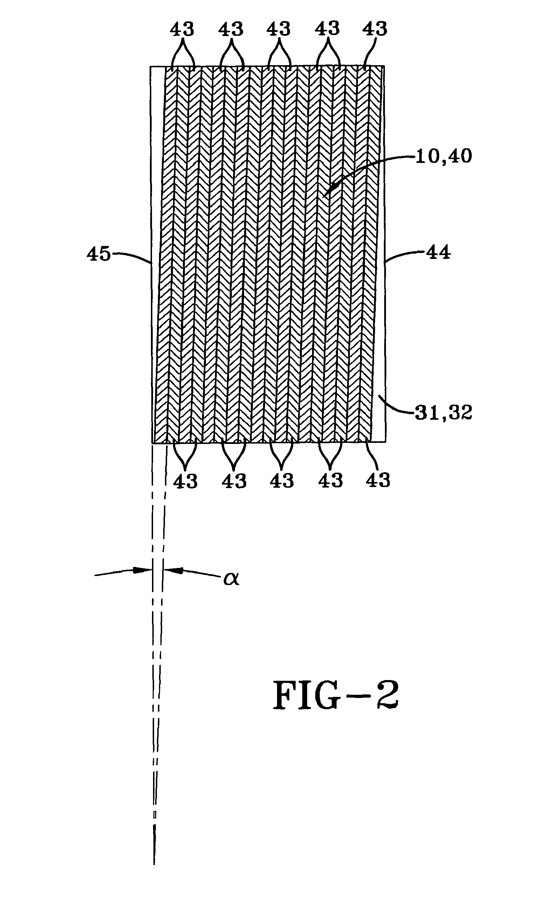

Fig. 2 gives a cutaway top view onto the layer 10 forming the belt structure 40 in a first embodiment. Fig. 2 shows that the layer 10 covers the carcass 31 with the carcass ply 32 substantially completely besides a small inner lateral edge 44 on the inner lateral side of the tire 21 and a small outer lateral edge 45, which are due to the fact that the strips 43 are inclined at an angle α of 4° relative to the circumferential direction of the tire 21 for example thus forming a spiral overlay as belt structure 40. The width of the strips 43 is 40 mm for example. Their thickness preferably is of from 1 mm to 3 mm, for example 2 mm.

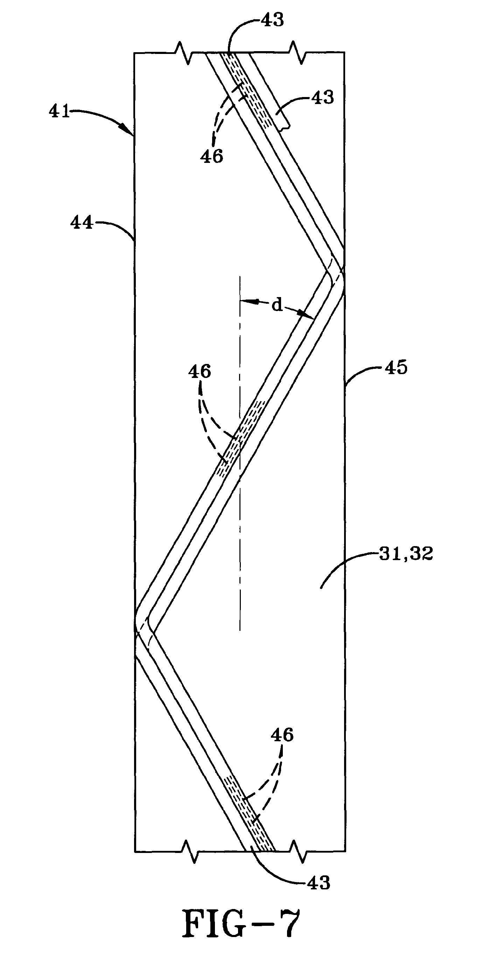

Fig. 7 shows an alternative, less preferred cutaway top view onto the layer 10 forming the belt structure 40 of Fig. 1. In this embodiment, the layer 10 is formed by a plurality of adjacent strips 43 reinforced with cord 46, preferably nylon cord. The strips 43 are inclined at an angle d relative to the circumferential direction of the tire 21, which is considerably greater than the angle a of Fig. 2. In Fig. 7, the angle d is between 15° and 45°, for example 20°.

It is apparent for a man skilled in the art that the belt structure 40 comprising strips 43 can be realized in many variations using a continuous strip 43 which is wrapped onto the carcass 31 or an intermediate layer applied radially outside of the carcass 31 forming a pattern of the belt structure 40. Fig. 2 and Fig. 7 show two embodiments of such a pattern. The parameters which affect this pattern are the angle of the strip 43 relative to the circumferential direction of the tire 21 (inclination of the strip 43), the width of the strip 43, and the width of the crown region 60, which is covered by the belt structure 40. It should also be mentioned in this context that it is also possible that the wrapped strips 43 cover the carcass only partially in the crown region 60, i.e. the layer 60 is not a closed layer of adjacent strips 43 but rather a texture-like of mesh-like structure with open portions. The preferred embodiment, however, is shown by Fig. 2.

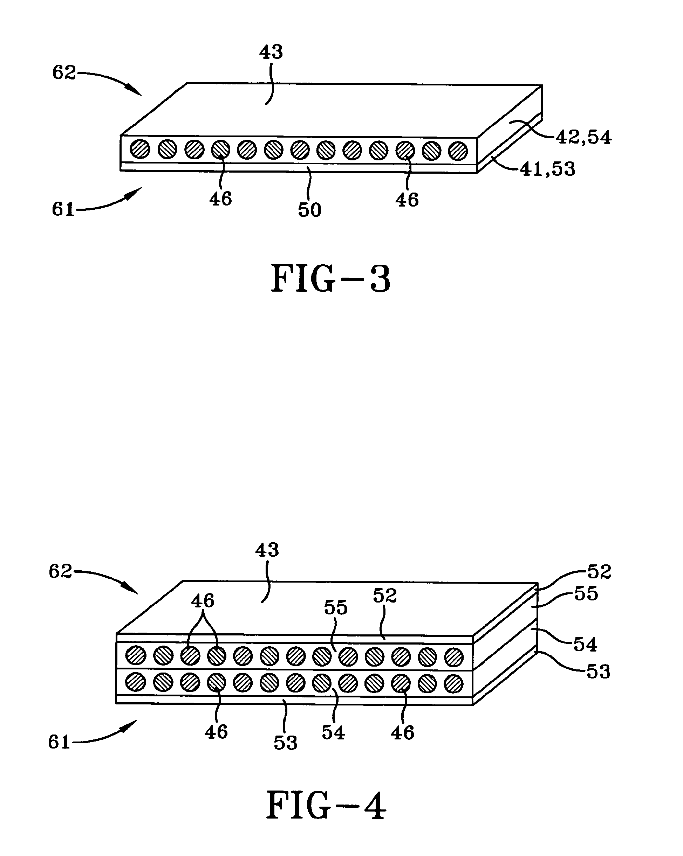

Fig. 3 shows, as a comparative example not being part of the invention, a perspective view of a first part of the strip 43 usable to realize the embodiments according to Fig. 1, Fig. 2 or Fig. 7. The strip 43 according to Fig. 3 comprises an outer side 42 and an inner side 41. The outer side 42 is formed by a rubberized cord layer or a ply 54 with a plurality of parallel nylon cords 46. The inner side 41 is formed by a cushion layer 53 made of rubber 50. The thickness of the cushion layer 53 is of from 0.2 mm to 3 mm, preferably of from 0.5 mm to 1.5 mm, for example 1.0 mm. The thickness of the rubberized cord layer 54 is of from 0.5 mm to 3 mm, preferably of from 0.8 mm to 1.5 mm, for example 1.0 mm. When applying the strip 43, the cushion layer 53 is located on the radially outer side 62 of the tire 21, and the rubberized cord layer 54 is located on the radially inner side 61 of the tire 21 accordingly, thus the rubberized cord layer 54 facing and contacting the radially inner side of the tread portion 25. In a preferred embodiment, the layers 53, 54 have been joint together to a single assembled layer using the method of bonding elastomeric layers according to WO-A1-01/21690 before being applied as a strip 43.

The cushion layer 53 protects the carcass or the carcass ply respectively from being damaged during a retreading of the tire 21. Such a retreading implies a removal of the tread 30 and at least a part of the belt structure 40 by cutting along a buff-line through the cushion layer 53. Thus, the cushion layer 53 acts like a buffer during the removal of the tread 30. Later, a new belt structure 40 is applied onto the buffed carcass 31, which includes the remaining part of the cushion layer 53 after cutting along the buff-line during the removal of the old tread and old belt structure 41 (i.e. a thin layer made of rubber on its radially outer side), in the usual way. This is followed by bringing up a new tread 30.

Fig. 4 shows, as a comparative example not being part of the invention, a perspective view of a second short part of the strip 43 usable to realize the embodiments according to Fig. 1, Fig. 2 or Fig. 7. It mainly differs form Fig. 3 in the layering. In fact, the embodiment of Fig. 4 is a sandwich construction of two assembled layers made according to Fig. 3 with the cushion layers 52, 53 being outside. In more detail, Fig. 4 comprises an inner cushion layer 53, an inner rubberized cord layer 54, an outer rubberized cord layer 55 and an outer cushion layer 52. The thickness of the cushion layers 52, 53 can be the same, but preferably, the thickness of the inner cushion layer 53 on the radially inner side 61 of the tire 21 is higher than the thickness of the outer cushion layer 52 on the radially outer side 62 of the tire 21. Preferably, this difference in thickness is of from 0.3 mm to 1 mm, for example 0.5 mm. Preferably, the strip 43 according to Fig. 4 is realized again using the method of WO-A1-01/21690.

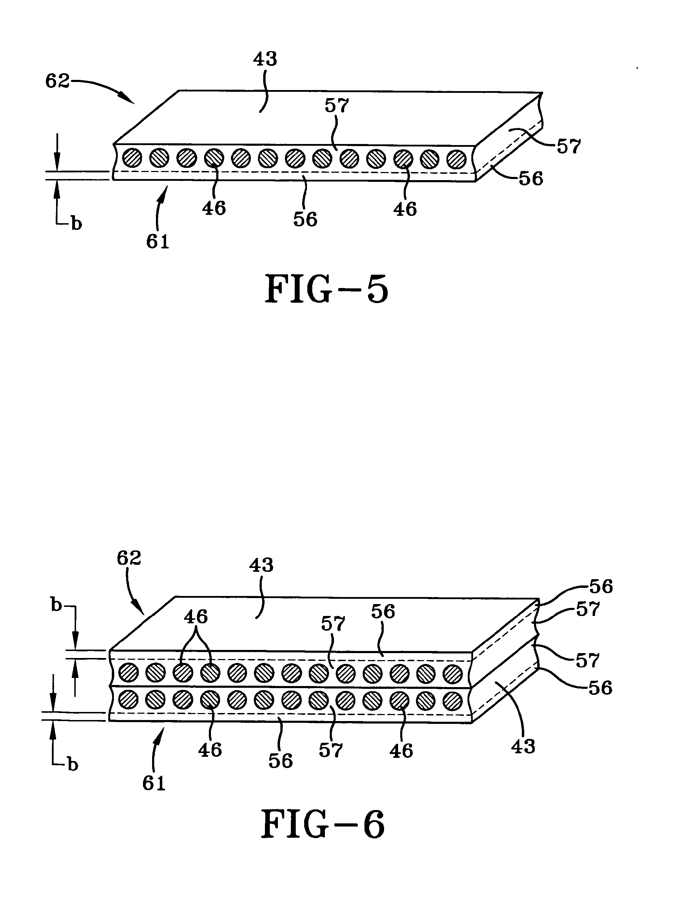

Fig. 5 shows a perspective view of a first embodiment of a short part of the strip 43 usable to realize the embodiments according to Fig. 1, Fig. 2 or Fig. 7. The strip 43 according to Fig. 5 comprises an outer side 42 and an inner side 41. The outer side 42 is formed by a layer-like range 57 with cord with a plurality of parallel nylon cords 46. The inner side 41 is formed by a layer-like cushion range 56 made of rubber. The difference between Fig. 5 and Fig. 3 is that the strip 43 according to Fig. 5 is an integral part not being a sandwich of to layers bond together. In Fig. 5, the cord reinforced strip 43 comprises a plurality of coplanar cords 46 embedded in rubber, wherein the plane of the coplanar cords 46 is parallel to the plane of the strip 43, and wherein the distance from the plane of the coplanar cords 46 to an upper surface plane of the strip 43 is different form the distance of the plane of the coplanar cords 46 to a lower surface plane of the strip 43. Thus, the layer-like cushion range 56 made of rubber is formed having a thickness b. Preferably, the thickness b is of from 0.2 mm to 3 mm, more preferably of from 0.5 mm to 1.0 mm, for example 0.5 mm. Analogous to Fig. 3, the cushion range 56, which corresponds to the inner cushion layer 53 in Fig. 3, is preferably located on the radially inner side of the tire 21. The thickness of the range 57 is of from 0.5 mm to 3 mm, preferably of from 0.8 mm to 1.5 mm, for example 1.0 mm. This leads to a total thickness for the strip 43 of 1.5 mm for example.

Fig. 6 shows a perspective view of a second embodiment of a short part of the strip 43 usable to realize the embodiments according to Fig. 1, Fig. 2 or Fig. 7. It differs form Fig. 5 only in the layering. In fact, the embodiment of Fig. 6 is a sandwich construction of two layers made according to Fig. 5 with the layer-like cushion ranges 56 being outside. Again, the two ranges 57 have been joint together using the method of bonding elastomeric layers according to WO-A1-01/21690 before being applied as a strip 43. It should be mentioned that the thickness of the cushion range 56 being on the radially inner side 61 of the tire 21 needs not to be the same as the thickness of the cushion range 56 being on the radially inner side 62. In fact, it is preferred, when its thickness on the radially inner side 61 is of from 0.1 mm to 1.0 mm, for example 0.3 mm, greater than its thickness on the radially outer side 62.

The application of the strip 43 onto the carcass is done by providing such a rubberized strip 43 including one or more cords 46, winding the strip 43 generally in the circumferential direction while being inclined to extend between side ends or lateral edges 44 and 45 and conducting such a winding many times while the strip 43 is shifted at approximately a width of the strip 43 in the circumferential direction so as preferably not to form a gap between the adjoining strips 43.

The tire 21 is for example a 42x17.OR18 radial ply aircraft tire. In practice, the strip 43 preferably comprises of from 2 to 20 cords 46 within each strip 43. In the exemplary tire 21 of the size 42x17.0R18 strips 43 having 8 cords per strip 43 were used.

The spirally wound circumferential layer 10, by resisting growth in the crown area 60 of the tire 21, greatly reduces the cut propensity due to foreign object damage and also reduces tread cracking under the grooves. This means the tire's high-speed durability is greatly enhanced and its load carrying capacity is even greater.

The method to manufacture the tire 21, for example a radial aircraft tire, is widely the same as usual in the tire building art, besides that a tread reinforcing ply layer cut according to the size of the tire 21 before application is replaced by the layer 10 formed by the wrapped strip 43. In more detail, in the case of a radial aircraft tire 21 comprising a carcass 31 with casing plies, belt plies applied radially outward of the casing plies, an overlay applied radially outward of the belt plies, a tread reinforcing ply applied radially outward of the overlay and a tread 30 applied radially outward of the tread reinforcing ply, the tread reinforcing ply is replaced by the layer 10 of the wrapped strip 43. This applies also to a bias aircraft tire 21 with a carcass 31 with plies, breakers applied radially outward of the plies, a tread reinforcing ply applied radially outward of the breakers and a tread 30 applied radially outward of the tread reinforcing ply, where again the tread reinforcing ply is replaced by the layer 10 of the wrapped strip 43.

The method of retreading the tire 21, for example a radial aircraft tire 21, is also widely the same as usual in the retreading of tires and required by standards of aircraft manufacturers like Boeing, besides that after the buffing of the carcass 31 during retreading and, if needed, a repair of damages using approved repair patches, the tread reinforcing ply layer is realized by wrapping the strip 43 as a green tread reinforcing rubberized ply layer 10 radially upside onto the carcass 31 instead of using a cut ply layer. During the next retreading processing, the cushion layers 50, 53 or 56 made of rubber for example serve then as cushion layers, which are cut through along the buff-line running through these layers 50, 53 or 56.

## Claims

1. A pneumatic tire having a carcass (31) and a crown region (60), the crown region (60) comprising a crown reinforcement structure and a tread portion (25) with a radially inner side and a tread on its radially outer side, wherein the crown reinforcement structure is located between the tread portion (25) and the carcass (31) and comprises a plurality of adjacent cord reinforced strips (43), and wherein the cord reinforced strips (43) are in direct contact either with the inner side of the tread portion (25) or are separated from the tread portion (25) only by a rubber cushion layer (52, 53, 56), **characterized in that** at least one cord reinforced strip (43) comprises a plurality of coplanar cords embedded in the strip (43), the plane of the coplanar cords being parallel to the plane of the strip (43), and the distance from the plane of the coplanar cords to an upper surface plane of the strip (43) being different form the distance of the plane of the coplanar cords to a lower surface plane of the strip (43).

2. The pneumatic tire of claim 1, wherein the plurality of adjacent cord reinforced strips (43) forms at least one layer, wherein the layer at least substantially covers the carcass (31) in the crown region (60) and laterally extends from one lateral side of the tread portion to the other lateral side of the tread portion, and wherein the layer is either at least partially in direct contact with the inner side of the tread portion (25) or is at least partially separated from the tread portion (25) only by a rubber cushion layer (52, 53, 56).

3. The pneumatic tire of claim 1 or 2, wherein the strips (43) have a width of from 3 mm to 70 mm and/or are reinforced by a plurality of parallel cords.

4. The pneumatic tire of at least one of the previous claims, wherein the strips (43) are inclined at 1° to 10° relative to the circumferential direction of the tire (21) and formed by one of spirally winding or zigzag-shaped winding a continuous strip onto the carcass (31).

5. The pneumatic tire of at least one of the previous claims, wherein the surface side of the reinforced strips (43) being arranged across the tread portion (25) of the tire (21) is at least partially in direct contact with a rubber cushion layer (52, 53, 56), the rubber cushion layer preferably having a thickness of from 0.2 mm to 3 mm.

6. The pneumatic tire of claim 1, wherein the difference in distances is of from 0.2 mm to 3 mm.

7. The pneumatic tire of claim 1, wherein the surface plane of the strip (43) with the smaller distance to the plane of the coplanar cords faces the radially inner side of the tread portion.

8. The pneumatic tire of at least one of the previous claims, wherein the tire is an aircraft tire.

9. A process to manufacture a pneumatic tire, the process comprising the steps of:
(a) preparing an assembly with a carcass (31), a green tread reinforcing rubberized ply layer applied radially upside of the carcass (31), and a green tread portion applied onto the green tread reinforcing rubberized ply layer, and
(b) transferring the assembly into the pneumatic tire (21) by curing, wherein the green tread reinforcing rubberized ply layer is formed by winding a continuous green rubberized cord comprising strip radially upside of the carcass (31) or an intermediate layer applied onto the carcass (31), and that the green tread portion is applied in such a way onto the green tread reinforcing rubberized ply layer that it is either in direct contact with the green tread reinforcing rubberized ply layer or that it is separated from the green tread reinforcing rubberized ply layer only by a rubber cushion layer, **characterized in that** the green rubberized cord comprising strip comprises a plurality of coplanar cords embedded in the strip, the plane of the coplanar cords being parallel to the plane of the strip, wherein the distance from the plane of the coplanar cords to an upper surface plane of the strip is different from the distance of the plane of the coplanar cords to a lower surface plane of the strip, and wherein the strip is applied in such a way that the surface plane of the strip with the smaller distance to the plane of the coplanar cords faces the radially inner side of the green tread portion.

10. A process for retreading a pneumatic tire, the process comprising the steps of:
(a) providing a tire to be retreaded, the tire comprising a tread portion and a carcass (31),
(b) separating the tread portion from the carcass (31) by cutting through a cushion layer along a buff-line and removing the tread portion,
(c) preparing an assembly comprising applying a green tread reinforcing rubberized ply layer radially upside onto the carcass (31) and applying a green tread portion onto the green tread reinforcing rubberized ply layer, and
(d) transferring the assembly into the retreaded tire (21) by curing, wherein the green tread reinforcing rubberized ply layer is formed by winding a continuous green rubberized cord comprising strip onto the remaining part of the cushion layer being cut along the buff-line, and that the green tread portion is applied in such a way onto the green tread reinforcing rubberized ply layer that it is either in direct contact with the green tread reinforcing rubberized ply layer or that it is separated from the green tread reinforcing rubberized ply layer only by a rubber cushion layer, **characterized in that** the green rubberized cord comprising strip comprises a plurality of coplanar cords embedded in the strip, the plane of the coplanar cords being parallel to the plane of the strip, wherein the distance from the plane of the coplanar cords to an upper surface plane of the strip is different from the distance of the plane of the coplanar cords to a lower surface plane of the strip, and wherein the strip is applied in such a way that the surface plane of the strip with the smaller distance to the plane of the coplanar cords faces the radially inner side of the green tread portion.

## Patentansprüche

1. Luftreifen mit einer Karkasse (31) und einem Zenitbereich (60), wobei der Zenitbereich (60) eine Zenitverstärkungsstruktur und einen Laufflächenteil (25) mit einer radial inneren Seite und einer Lauffläche an seiner radial äußeren Seite umfasst, wobei die Zenitverstärkungsstruktur sich zwischen dem Laufflächenteil (25) und der Karkasse (31) befindet und eine Mehrzahl benachbarter kordverstärkter Streifen (43) umfasst, und wobei die kordverstärkten Streifen (43) in direktem Kontakt entweder mit der Innenseite des Laufflächenteils (25) sind oder nur durch eine Gummi-Kissenschicht (52, 53, 56) von dem Laufflächenteil (25) getrennt sind, **dadurch gekennzeichnet, dass** mindestens ein kordverstärkter Streifen (43) eine Mehrzahl von in dem Streifen (43) eingebetteten koplanaren Korden umfasst, wobei die Ebene der koplanaren Korde parallel zu der Ebene des Streifens (43) ist, und wobei der Abstand von der Ebene der koplanaren Korde zu einer Oberseitenebene des Streifens (43) verschieden von dem Abstand der Ebene der koplanaren Korde zu einer Unterseitenebene des Streifens (43) ist.

2. Luftreifen nach Anspruch 1, wobei die Mehrzahl benachbarter kordverstärkter Streifen (43) mindestens eine Lage bildet, wobei die Lage die Karkasse (31) in dem Zenitbereich (60) mindestens im Wesentlichen bedeckt und sich seitwärts von einer lateralen Seite des Laufflächenteils zu der anderen lateralen Seite des Laufflächenteils erstreckt, und wobei die Lage entweder mindestens teilweise in direktem Kontakt mit der Innenseite des Laufflächenteils (25) ist oder mindestens teilweise nur durch eine Gummi-Kissenschicht (52, 53, 56) von dem Laufflächenteil (25) getrennt ist.

3. Luftreifen nach Anspruch 1 oder 2, wobei die Streifen (43) eine Breite von 3 mm bis 70 mm haben und/oder durch eine Mehrzahl paralleler Korde verstärkt sind.

4. Luftreifen nach mindestens einem der vorgenannten Ansprüche, wobei die Streifen (43) um 1° bis 10° bezüglich der Umfangsrichtung des Reifens (21) geneigt sind und durch eines von spiralförmigem Aufwickeln oder zickzackförmigem Aufwickeln eines kontinuierlichen Streifens auf die Karkasse (31) gebildet sind.

5. Luftreifen nach mindestens einem der vorgenannten Ansprüche, wobei die Oberflächenseite der verstärkten Streifen (43), die über den Laufflächenteil (25) des Reifens (21) angeordnet sind, mindestens teilweise in direktem Kontakt mit einer Gummi-Kissenschicht (52, 53, 56) ist, wobei die Gummi-Kissenschicht bevorzugt eine Dicke von 0,2 mm bis 3 mm hat.

6. Luftreifen nach Anspruch 1, wobei der Unterschied in den Abständen 0,2 mm bis 3 mm beträgt.

7. Luftreifen nach Anspruch 1, wobei die Oberseitenebene des Streifens (43) mit dem kleineren Abstand zur Ebene der koplanaren Korde der radial inneren Seite des Laufflächenteils zugewandt ist.

8. Luftreifen nach mindestens einem der vorgenannten Ansprüche, wobei der Reifen ein Flugzeugreifen ist.

9. Verfahren zur Herstellung eines Luftreifens, wobei das Verfahren die Schritte umfasst des :
(a) Herstellens einer Baugruppe mit einer Karkasse (31), einer unvulkanisierten gummierten Laufflächenverstärkungslage, die radial oberhalb der Karkasse (31) angebracht ist, und einem unvulkanisierten Laufflächenteil, das an der unvulkanisierten gummierten Laufflächenverstärkungslage angebracht ist, und
(b) Übertragens der Baugruppe in den Luftreifen (21) durch Vulkanisieren, wobei die unvulkanisierte gummierte Laufflächenverstärkungslage durch Aufwickeln eines durchlaufenden unvulkanisierten gummierten Kord umfassenden Streifens radial oberhalb der Karkasse (31) oder einer an der Karkasse (31) angebrachten Zwischenlage gebildet wird, und dass der unvulkanisierte Laufflächenteil so auf der unvulkanisierten gummierten Laufflächenverstärkungslage angebracht wird, dass er entweder in direktem Kontakt mit der unvulkanisierten gummierten Laufflächenverstärkungslage ist oder dass er nur durch eine Gummi-Kissenschicht von der unvulkanisierten gummierten Laufflächenverstärkungslage getrennt ist, **dadurch gekennzeichnet, dass** der unvulkanisierten gummierten Kord umfassende Streifen eine Mehrzahl von in dem Streifen eingebetteten koplanaren Korden umfasst, wobei die Ebene der koplanaren Korde parallel zu der Ebene des Streifens ist, wobei der Abstand von der Ebene der koplanaren Korde zu einer Oberseitenebene des Streifens verschieden von dem Abstand der Ebene der koplanaren Korde zu einer Unterseitenebene des Streifens ist, und wobei der Streifen so angebracht ist, dass die Oberseitenebene des Streifens mit dem kleineren Abstand zu der Ebene der koplanaren Korde der radial inneren Seite des unvulkanisierten Laufflächenteils zugewandt ist.

10. Verfahren zur Runderneuerung eines Luftreifens, wobei das Verfahren die Schritte umfasst des:
(a) Bereitstellens eines rundzuerneuernden Reifens, wobei der Reifen einen Laufflächenteil und eine Karkasse (31) umfasst,
(b) Abtrennens des Laufflächenteils von der Karkasse (31) durch Schneiden durch eine Kissenschicht entlang einer Stoßlinie und Entfernens des Laufflächenteils,
(c) Bereitstellens einer Baugruppe, umfassend das Anbringen einer unvulkanisierten gummierten Laufflächenverstärkungslage radial oberhalb der Karkasse (31) und Anbringens eines unvulkanisierten Laufflächenteils auf der unvulkanisierten gummierten Laufflächenverstärkungslage, und
(d) Übertragens der Baugruppe in den runderneuerten Reifen (21) durch Vulkanisieren, wobei die unvulkanisierte gummierte Laufflächenverstärkungslage durch Aufwickeln eines durchlaufenden unvulkanisierten gummierten Kord umfassenden Streifens auf den restlichen Teil der Kissenschicht, die entlang der Stoßlinie abgeschnitten wird, gebildet wird, und dass der unvulkanisierte Laufflächenteil so auf der unvulkanisierten gummierten Laufflächenverstärkungslage angebracht wird, dass er entweder in direktem Kontakt mit der unvulkanisierten gummierten Laufflächenverstärkungslage ist oder dass er nur durch eine Gummi-Kissenschicht von der unvulkanisierten gummierten Laufflächenverstärkungslage getrennt ist, **dadurch gekennzeichnet, dass** der unvulkanisierten gummierten Kord umfassende Streifen eine Mehrzahl von in dem Streifen eingebetteten koplanaren Korden umfasst, wobei die Ebene der koplanaren Korde parallel zu der Ebene des Streifens ist, wobei der Abstand von der Ebene der koplanaren Korde zu einer Oberseitenebene des Streifens verschieden von dem Abstand der Ebene der koplanaren Korde zu einer Unterseitenebene des Streifens ist, und wobei der Streifen so angebracht ist, dass die Oberseitenebene des Streifens mit dem kleineren Abstand zu der Ebene der koplanaren Korde der radial inneren Seite des unvulkanisierten Laufflächenteils zugewandt ist.

## Revendications

1. Bandage pneumatique possédant une carcasse (31) et une zone de sommet (60), la zone de sommet (60) comprenant une structure de renforcement de sommet et une portion de bande de roulement (25) comportant un côté interne en direction radiale et une bande de roulement sur son côté externe en direction radiale, dans lequel la structure de renforcement de sommet est située entre la portion de bande de roulement (25) et la carcasse (31) et comprend plusieurs bandes adjacentes (43) renforcées avec des câblés, et dans lequel les bandes (43) renforcées avec des câblés, soit entrent en contact direct avec le côté interne de la portion de bande de roulement (25), soit sont séparées de la portion de bande de roulement (25) uniquement par une couche de rembourrage en caoutchouc (52, 53, 56),
**caractérisé en ce qu'**au moins une bande (43) renforcée avec des câblés comprend plusieurs câblés coplanaires encastrés dans la bande (43), le plan des câblés coplanaires étant parallèle au plan de la bande (43) et la distance s'étendant entre le plan des câblés coplanaires et le plan de la surface inférieure de la bande (43) étant différente de la distance s'étendant entre le plan des câblés coplanaires et le plan de la surface inférieure de la bande (43).

2. Bandage pneumatique selon la revendication 1, dans lequel lesdites plusieurs bandes adjacentes (43) renforcées avec des câblés forment au moins une couche, la couche recouvrant, au moins de manière substantielle, la carcasse (31) dans la zone de sommet (60) et s'étendant latéralement depuis un côté latéral de la portion de bande de roulement jusqu'à l'autre côté latéral de la portion de bande de roulement, et la couche, soit entrant au moins en partie en contact direct avec le côté interne de la portion de bande de roulement (25), soit étant séparée, au moins en partie, de la portion de bande de roulement (25) uniquement par une couche de rembourrage en caoutchouc (52, 53, 56).

3. Bandage pneumatique selon la revendication 1 ou 2, dans lequel les bandes (43) possèdent une largeur de 3 mm à 70 mm et/ou sont renforcées par plusieurs câblés parallèles.

4. Bandage pneumatique selon au moins une des revendications précédentes, dans lequel les bandes (43) sont inclinées en formant un angle de 1° à 10° par rapport à la direction circonférentielle du bandage pneumatique (21) et sont formées par, soit un enroulement en spirale, soit un enroulement en zigzag d'une bande continue sur la carcasse (31).

5. Bandage pneumatique selon au moins une des revendications précédentes, dans lequel le côté de surface des bandes renforcées (43), disposé à travers la portion de bande de roulement (25) du bandage pneumatique (21), entre, au moins en partie, en contact direct avec une couche de rembourrage en caoutchouc (52, 53, 56), la couche de rembourrage en caoutchouc possédant de préférence une épaisseur de 0,2 mm à 3 mm.

6. Bandage pneumatique selon la revendication 1, dans lequel la différence concernant les distances s'élève de 0,2 mm à 3 mm.

7. Bandage pneumatique selon la revendication 1, dans lequel le plan de surface de la bande (43) présentant la plus petite distance par rapport au plan des câblés coplanaires, est opposé au côté interne de la portion de bande de roulement, en direction radiale.

8. Bandage pneumatique selon au moins une des revendications précédentes, dans lequel le bandage pneumatique est un bandage pneumatique pour aéroplane.

9. Procédé de confection d'un bandage pneumatique, le procédé comprenant les étapes consistant à :
(a) préparer un assemblage comprenant une carcasse (31), une couche de nappe caoutchouteuse renforçant une bande de roulement non vulcanisée, appliquée par-dessus la carcasse (31), en direction radiale, et une portion de bande de roulement non vulcanisée appliquée sur la couche de nappe caoutchouteuse renforçant la bande de roulement non vulcanisée ;
(b) transformer l'assemblage en bandage pneumatique (21) par vulcanisation, la couche de nappe caoutchouteuse renforçant la bande de roulement non vulcanisée étant réalisée en enroulant une bande continue comprenant des câblés, caoutchouteuse, non vulcanisée, par-dessus la carcasse (31) ou une couche intermédiaire appliquée sur la carcasse (31), et en ce que la portion de bande de roulement non vulcanisée est appliquée sur la couche de nappe caoutchouteuse renforçant la bande de roulement non vulcanisée de telle sorte que, soit elle entre en contact direct avec la couche de nappe caoutchouteuse renforçant la bande de roulement non vulcanisée, soit elle est séparée de la couche de nappe caoutchouteuse renforçant la bande de roulement non vulcanisée uniquement par une couche de rembourrage en caoutchouc, **caractérisé en ce que** la bande caoutchouteuse non vulcanisée comprenant des câblés comprend plusieurs câblés coplanaires encastrés dans la bande, le plan des câblés coplanaires étant parallèle au plan de la bande, la distance s'étendant entre le plan des câblés coplanaires et le plan de la surface inférieure de la bande étant différente de la distance s'étendant entre le plan des câblés coplanaires et le plan de la surface inférieure de la bande et la bande étant appliquée de telle sorte que le plan de surface de la bande présentant la plus petite distance par rapport au plan des câblés coplanaires, est opposé au côté interne de la portion de bande de roulement non vulcanisée, en direction radiale.

10. Procédé pour le rechapage d'un bandage pneumatique, procédé comprenant les étapes consistant à :
(a) procurer un bandage pneumatique à rechaper, le bandage pneumatique comprenant une portion de bande de roulement et une carcasse (31) ;
(b) séparer la portion de bande de roulement de la carcasse (31) en pratiquant une découpe à travers une couche de rembourrage le long d'une ligne de polissage et retirer la portion de bande de roulement ;
(c) préparer un assemblage comprenant le fait d'appliquer une couche de nappe caoutchouteuse renforçant une bande de roulement non vulcanisée au-dessus la carcasse (31), en direction radiale, et le fait d'appliquer une portion de bande de roulement non vulcanisée sur la couche de nappe caoutchouteuse renforçant la bande de roulement non vulcanisée ;
(d) transformer l'assemblage en bandage pneumatique rechapé (21) par vulcanisation, la couche de nappe caoutchouteuse renforçant la bande de roulement non vulcanisée étant réalisée en enroulant une bande continue comprenant des câblés, caoutchouteuse, non vulcanisée, sur la partie restante de la couche de rembourrage découpée le long de la ligne de polissage, et en ce que la portion de bande de roulement non vulcanisée est appliquée sur la couche de nappe caoutchouteuse renforçant la bande de roulement non vulcanisée de telle sorte que, soit elle entre en contact direct avec la couche de nappe caoutchouteuse renforçant la bande de roulement non vulcanisée, soit elle est séparée de la couche de nappe caoutchouteuse renforçant la bande de roulement non vulcanisée uniquement par une couche de rembourrage en caoutchouc, **caractérisé en ce que** la bande caoutchouteuse non vulcanisée comprenant des câblés comprend plusieurs câblés coplanaires encastrés dans la bande, le plan des câblés coplanaires étant parallèle au plan de la bande, la distance s'étendant entre le plan des câblés coplanaires et le plan de la surface inférieure de la bande étant différente de la distance s'étendant entre le plan des câblés coplanaires et le plan de la surface inférieure de la bande et la bande étant appliquée de telle sorte que le plan de surface de la bande présentant la plus petite distance par rapport au plan des câblés coplanaires, est opposé au côté interne de la portion de bande de roulement non vulcanisée, en direction radiale.
